# EUROPEAN PATENT APPLICATION

(11) **EP 4 711 034 A1**
(43) Date of publication of application: **18.03.2026**
(21) Application number: 25201347.9
(22) Date of filing: 10.09.2025
(51) Int. Cl.: B01F 27/723, H01M 4/04, H01M 4/139, B01F 23/53, B01F 23/50, B01F 27/63, B01F 27/722, B29B 7/48, B29C 48/405, B29C 48/68, B29C 48/685

(54) **MIXING DEVICE AND ELECTRODE MIXING METHOD**

(30) Priority: 13.09.2024 KR 20240125897
(71) Applicant: SAMSUNG SDI CO., LTD., Yongin-si, Gyeonggi-do 17084 (KR)
(72) Inventor: Jang, Kyeongho, 17084 Yongin-si, Gyeonggi-do (KR); Ahn, Hyejin, 17084 Yongin-si, Gyeonggi-do (KR); Lee, Hansol, 17084 Yongin-si, Gyeonggi-do (KR); Hwang, Yeyeong, 17084 Yongin-si, Gyeonggi-do (KR)
(74) Representative: Meissner Bolte Partnerschaft mbB

(57) **Abstract**

A mixing device (10) includes a supply module (100) configured to provide an active material, a binder, and/or a conductive material to a mixing module (200), the mixing module (200) configured to form an electrode slurry including the active material, the binder, and/or the conductive material, and a discharge module (300) configured to discharge the electrode slurry. The mixing module (200) includes a pair of screws (211, 212) having threads formed on an outer surface in along a longitudinal direction of the mixing module (200), the pair of screws (211, 212) configured to rotate, and a barrel (220) including a hole (230) configured to accommodate the pair of screws (211, 212), the barrel (220) including an embossed pattern (271) or a debossed pattern (281) formed on an inner surface of the hole (230).

## Description

### BACKGROUND

### 1. FIELD

The present invention relates to a mixing device and an electrode mixing method.

### 2. DESCRIPTION OF THE RELATED ART

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

The positive electrode and the negative electrode may be formed by applying a slurry in which an active material, a conductive material, and a binder are mixed on a substrate made of a metal or the like. When forming the slurry (the mixing process), the active material, the conductive material, and the binder are evenly dispersed to improve the performance and lifespan of the battery. However, due to space limitations of placing the mixing device, evenly dispersing the active material, the conductive material, the binder, and the like, may not occur in cases where there are physical constraints with respect to moving the active material, the conductive material, the binder, and the like.

The information disclosed in this Background section is for enhancement of understanding of the background of the present invention. The section may contain information that does not constitute related (or prior) art.

### SUMMARY

The present invention provides a mixing device and an electrode mixing method.

According to the present invention a mixing device includes a supply module configured to provide an active material, a binder, and/or a conductive material to a mixing module; the mixing module configured to form an electrode slurry including the active material, the binder, and/or the conductive material; and a discharge module configured to discharge the electrode slurry, wherein the mixing module includes: a first screw positioned along a longitudinal direction of the mixing module; a second screw positioned along the longitudinal direction; and a barrel including a hole configured to accommodate the first screw and the second screw, wherein the barrel includes one or more of an embossed pattern or a debossed pattern formed on an inner surface of the hole.

According to one or more embodiments, at least one of the embossed pattern or the debossed pattern may be formed on an entire area of the inner surface of the hole of the barrel.

In an embodiment, the one or more of the embossed pattern or the debossed pattern is formed on an entire area of the inner surface.

According to one or more embodiments, the hole of the barrel may include a first area in which at least one pattern of the embossed pattern and the debossed pattern may be formed, and a second area in which the at least one pattern may not be formed.

In an embodiment, the hole includes a first area including the one or more of the embossed pattern or the debossed pattern and a second area in an absence of the embossed pattern and the debossed pattern.

According to one or more embodiments, in the hole of the barrel, the first area and the second area may be alternately formed in a longitudinal direction of the barrel.

In an embodiment, the first area and the second area are alternately formed along the longitudinal direction.

According to one or more embodiments, the pair of screws may include a first screw and a second screw, the hole of the barrel may include a first hole in which the first screw may be accommodated and a second hole in which the second screw may be accommodated, and the first hole and the second hole may communicate with each other in an area in which the first screw and the second screw engage.

In an embodiment, the hole includes a first hole accommodating the first screw and a second hole accommodating the second screw, wherein the first hole and the second hole overlap at or near an area in which the first screw and the second screw are configured to engage each other.

According to one or more embodiments, the first screw and the second screw may have an elliptical cross-section, and in the elliptical cross-section, a long axis of the first screw and a long axis of the second screw may be vertically disposed and engaged to rotate.

In an embodiment, the first screw and the second screw have a partially substantially elliptical cross-section, and in the partially substantially elliptical cross-section, a long axis of the first screw and a long axis of the second screw are perpendicularly disposed from each other.

According to one or more embodiments, the mixing module may further include a driving motor connected to the screw to provide rotational driving force to the screw, and a controller controlling an operation of the driving motor based on one of components and contents of the active material, the binder, and the conductive material.

In an embodiment, the mixing module further includes: a driving motor rotatably connected to each of the first screw and the second screw; and a controller configured to control the driving motor.

According to one or more embodiments, at least one of the embossed pattern or the debossed pattern may be an irregularly formed random pattern.

In an embodiment, the one or more of the embossed pattern or the debossed pattern includes an irregularly formed and/or a random pattern.

According to one or more embodiments, at least one of the embossed pattern or the debossed pattern may be continuously formed along a longitudinal direction of the screw.

In an embodiment, the one or more of the embossed pattern or the debossed pattern is continuously formed along the longitudinal direction.

According to one or more embodiments, the embossed pattern and the debossed pattern may be formed to be spaced apart from each other along a longitudinal direction of the screw.

In an embodiment, the one or more of the embossed pattern or the debossed pattern includes two or more of the embossed pattern or the debossed pattern spaced apart from one another along the longitudinal direction.

According to one or more embodiments, at least one of the embossed pattern or the debossed pattern may be formed to have a spiral structure along a longitudinal direction of the screw.

In an embodiment, the one or more of the embossed pattern or the debossed pattern has a spiral structure along the longitudinal direction.

According to one or more embodiments, at least one of the embossed pattern or the debossed pattern may be formed to be curved along a longitudinal direction of the screw.

In an embodiment, the one or more of the embossed pattern or the debossed pattern has a curved structure along the longitudinal direction.

According to one or more embodiments, the embossed pattern may be formed to have a plurality of protrusions protruding from at least one area of the inner surface.

In an embodiment, the embossed pattern includes a plurality of protrusions protruding from the inner surface.

According to one or more embodiments, the protrusion may have at least one of a cone shape or a polygonal pyramid shape.

In an embodiment, the plurality of protrusions has a conical shape or a polygonal pyramidal shape.

According to one or more embodiments, respective heights of the protrusions from the inner surface may be different.

In an embodiment, respective heights of each of the protrusions from the inner surface are different from one another.

According to one or more embodiments, the debossed pattern may be formed to have a plurality of groove recessed into at least one area of the inner surface.

In an embodiment, the debossed pattern includes a plurality of grooves recessed into the inner surface.

According to one or more embodiments, in the case where a plurality of embossed patterns may be formed on the inner surface of the hole, a length of an outer radius of each of the pair of screws may be shorter than a length obtained by subtracting a length of a height of the embossed pattern protruding from the inner surface from a length of an inner radius of each of the pair of holes.

In an embodiment, an outer radius of each of the first screw and the second screw is less than a length obtained by subtracting a height of the embossed pattern protruding from the inner surface, from an inner radius of each of first hole and the second hole.

According to one or more embodiments, in the case where a plurality of debossed patterns may be formed on the inner surface of the hole, a length of an outer radius of each of the pair of screws may be shorter than a length of an inner radius of each of the pair of holes.

In an embodiment, an outer radius of each of the first screw and the second screw is less than an inner radius of each of the first hole and the second hole.

According to the invention an electrode mixing method includes: providing, via a supply module, an active material, a binder, and/or a conductive material to a mixing module; forming, via the mixing module, an electrode slurry by combining the active material, the binder, and/or the conductive material; and discharging, via a discharge module, the electrode slurry, wherein the forming includes: providing the active material, the binder, and/or the conductive material to a barrel including a hole configured to accommodate a first screw and a second screw of the mixing module, wherein the barrel includes one or more of an embossed pattern or a debossed pattern formed on an inner surface of the hole; and combining the active material, the binder, and/or the conductive material by rotating the first screw and the second screw.

According to one or more embodiments, at least one of the embossed pattern or the debossed pattern may be an irregularly formed random pattern.

In an embodiment, the one or more of the embossed pattern or the debossed pattern includes an irregularly formed and/or a random pattern.

According to various embodiments of the present invention, the limitation of an equipment space may be reduced by including a twin screw extruder having a short moving path in a mixing device.

According to various embodiments of the present invention, a pattern may be formed within a barrel in which a twin screw is disposed to evenly disperse and mix an active material, a conductive boat, and a binder.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.
FIG. 1 shows a mixing device according to embodiments of the present invention.
FIG. 2 shows a mixing module according to embodiments of the present invention.
FIG. 3 shows a mixing module according to embodiments of the present invention.
FIG. 4 is a cross-sectional view taken along line A-A of FIG. 2 according to embodiments of the present invention.
FIG. 5 shows an embossed pattern and a debossed pattern according to embodiments of the present invention.
FIG. 6 shows a disposition relationship of a pair of screws according to embodiments of the present invention.
FIG. 7 shows an embossed pattern according to embodiments of the present invention.
FIG. 8 shows an embossed pattern according to embodiments of the present invention.
FIG. 9 shows an embossed pattern according to embodiments of the present invention.
FIG. 10 shows an embossed pattern according to embodiments of the present invention.
FIG. 11 shows an embossed pattern according to embodiments of the present invention.
FIG. 12 shows an embossed pattern according to embodiments of the present invention.
FIG. 13 shows an embossed pattern according to embodiments of the present invention.
FIG. 14 shows forming a debossed pattern according to embodiments of the present invention.
FIG. 15 shows a debossed pattern according to embodiments of the present invention.
FIG. 16 shows a debossed pattern according to embodiments of the present invention.
FIG. 17 shows a debossed pattern according to embodiments of the present invention.
FIG. 18 shows a debossed pattern according to embodiments of the present invention.
FIG. 19 shows a debossed pattern according to embodiments of the present invention.
FIG. 20 is a flowchart showing an electrode mixing method according to embodiments of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present invention. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present invention. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present invention and are not intended to limit the present invention.

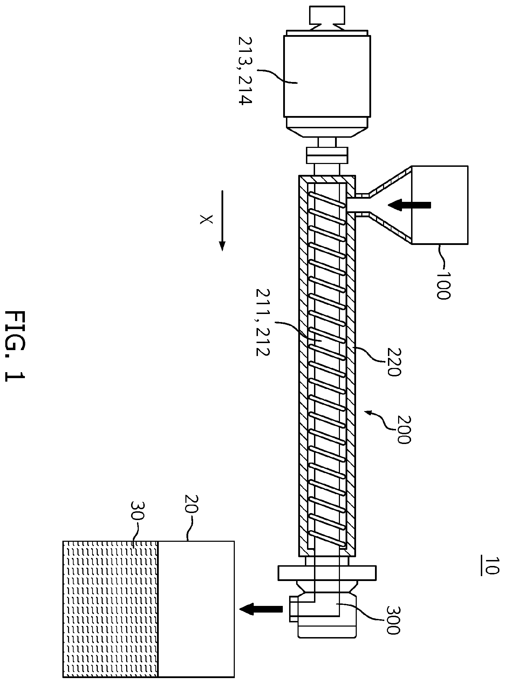

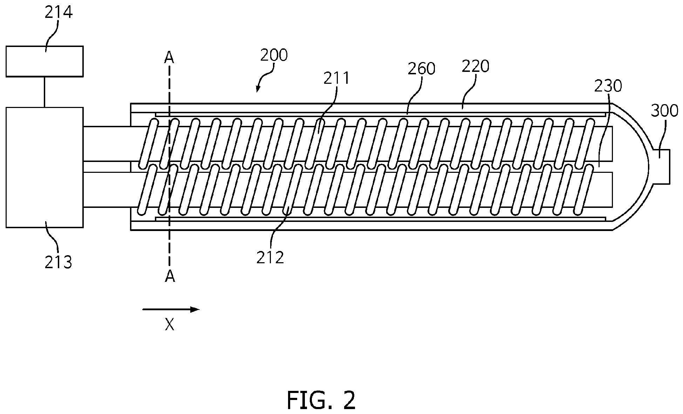

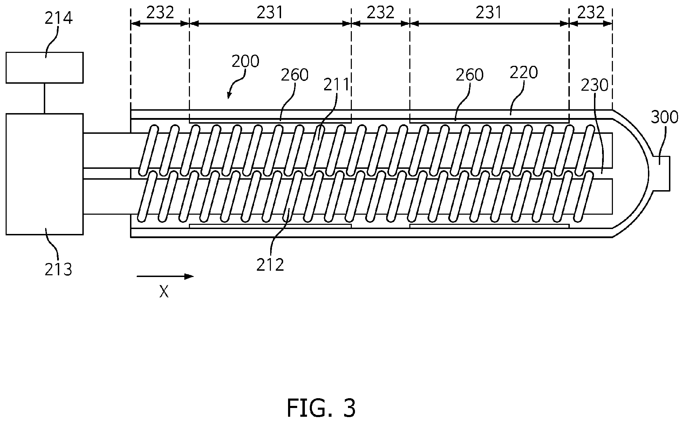

FIG. 1 shows a mixing device 10 according to an embodiment of the present invention. FIG. 2 shows a mixing module 200 according to embodiments of the present invention. FIG. 3 shows a mixing module 200 according to embodiments of the present invention.

Referring to FIG. 1 to FIG. 3, a mixing device 10 may include a supply module 100 for supplying an active material, a binder, and/or a conductive material, a mixing module 200 for forming an electrode slurry 30 by mixing the active material, the binder, and/or the conductive material supplied from the supply module 100, and a discharge module 300 for discharging the electrode slurry 30 to a coating device 20.

According to an embodiment, the supply module 100 may supply an active material, a binder, a conductive material, and/or a solvent for forming the electrode slurry 30 to the mixing module 200. In an embodiment, the supply module 100 is capable of distinguishing materials used for the positive electrode and the negative electrode and accordingly supplies the active material, the binder, and/or the conductive material required for each electrode to the mixing module 200. In an embodiment, the supply module 100 may supply the active material, the binder, and/or the conductive material to the mixing module 200 at various ratios based on various configurations of the secondary battery.

According to an embodiment, the positive electrode active material may include a compound (lithiated intercalation compound) that is capable of intercalating and deintercalating lithium. In an embodiment, the positive electrode active material may include at least one of a composite oxide of lithium and a metal selected from cobalt, manganese, nickel, and combinations thereof.

The composite oxide may include a lithium transition metal composite oxide. Non-limiting examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

In an embodiment, the following compounds represented by any one of the following Chemical Formulas may be used for the lithium transition metal composite oxide. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).
where A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, as a non-limiting example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, the positive electrode may further include an additive that is capable of serving as a sacrificial positive electrode.

The amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder is configured to adhere particles of the positive electrode active material to one another and also to adhere the positive electrode active material to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material may be used to ensure conductivity (e.g., electrical conductivity) to the electrode. Any material that does not contribute to chemical change (e.g., does not contribute to an undesirable chemical change to the rechargeable lithium battery) and capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

The negative electrode active material may include a material capable of reversibly intercalating/deintercalating lithium ions, a lithium metal, a lithium metal alloy, a material capable of doping/dedoping lithium, or a transition metal oxide.

The material capable of reversibly intercalating/deintercalating lithium ions may include a carbon-based negative electrode active material including, as a non-limiting example, crystalline carbon, amorphous carbon, or a combination thereof. The crystalline carbon may include graphite such as non-shaped, sheet-shaped, flake-shaped, sphere-shaped, or fiber-shaped natural graphite, or artificial graphite. The amorphous carbon may include a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may include a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. In an embodiment, the silicon-carbon composite may include a secondary particle (core) in which primary silicon particles are assembled, and an amorphous carbon coating layer (shell) on the surface of the secondary particle. The amorphous carbon may also exist between the primary silicon particles, and, as a non-limiting example, the primary silicon particles may be coated with the amorphous carbon. The secondary particle may exist dispersed in an amorphous carbon matrix.

The silicon-carbon composite may further include crystalline carbon. In an embodiment, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

In an embodiment, the negative electrode active material layer may include about 90 wt% to about 99 wt% of the negative electrode active material, about 0.5 wt% to about 5 wt% of the binder, and about 0 wt% to about 5 wt% of the conductive material.

The binder is configured to adhere particles of the negative electrode active material to one another and also to adhere the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of enhancing viscosity may be further included. The cellulose-based compound may include carboxymethyl cellulose, hydroxypropylmethyl cellulose, methyl cellulose, or an alkali metal salt thereof. The alkali metal may include Na, K, or Li.

The dry binder may include a polymer material capable of being fibrous. In an embodiment, the dry binder may include polytetrafluoroethylene, polyvinylidene fluoride, a polyvinylidene fluoride-hexafluoropropylene copolymer, polyethylene oxide, or a combination thereof.

The conductive material may be used to ensure conductivity (e.g., electrical conductivity) to the electrode. Any material that does not contribute to chemical change (e.g., does not contribute to an undesirable chemical change to the rechargeable lithium battery) and is capable of conducting electrons can be used in the battery. Non-limiting examples of the conductive material may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

According to an embodiment, the mixing module 200 may form the electrode slurry 30 by mixing an active material, a binder, and/or a conductive material supplied from the supply module 100. The mixing module 200 may include a pair of screws 211 and 212, a barrel 220, a driving motor 213, and a controller 214.

According to an embodiment, the pair of screws 211 and 212 have threads formed on the outer peripheral surface of the mixing module 200 in the longitudinal direction (e.g., X-axis direction) and is capable of rotating. The pair of screws 211 and 212 may be accommodated in a hole 230 formed in the barrel 220. The pair of screws 211 and 212 may rotate by driving force transmitted from the driving motor 213. The pair of screws 211 and 212 may rotate to mix the active material, the binder, and/or the conductive material supplied into the barrel 220 and transport the active material, the binder, and/or the conductive material to the discharge module 300. In an embodiment, an active material, a binder, and/or a conductive material may be introduced into the screw grooves of the pair of screws 211 and 212. The active material, the binder, and the conductive material introduced into the screw grooves may move in the X-axis direction by the rotational movement of the screws 211 and 212.

According to an embodiment, the pair of screws 211 and 212 may include a first screw 211 and a second screw 212. The rotation axes of the first screw 211 and the second screw 212 may be parallel to each other. The screw threads of each of the first screw 211 and the second screw 212 may be formed in a spiral shape in the X-axis direction. The first screw 211 and the second screw 212 may rotate in the same direction while the two screw threads engage each other.

According to an embodiment, the barrel 220 may include a hole 230 capable of accommodating the pair of screws 211 and 212. The active material, the binder, and/or the conductive material may be mixed in the hole 230 formed in the barrel 220. The space defined by the inner surface of the hole 230 and the outer surfaces of the pair of screws 211 and 212 may correspond to a movement path where the active material, the binder, and/or the conductive material may be transferred from the supply module 100 to the discharge module 300.

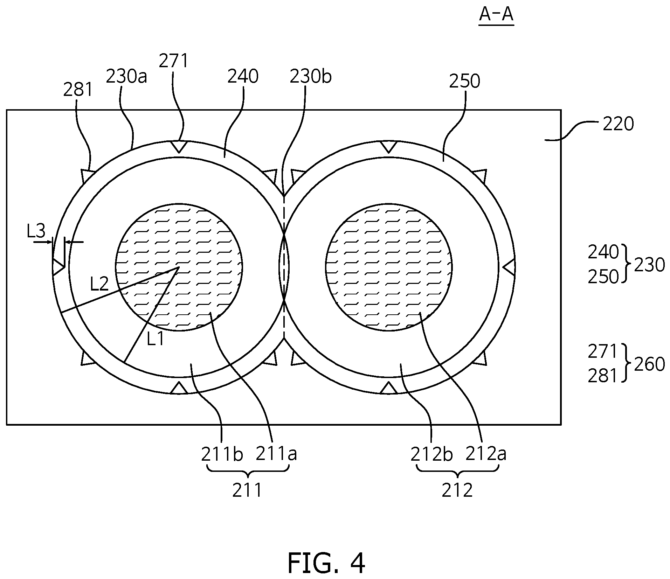

According to an embodiment, at least one pattern 260 including an embossed pattern (see 271 of FIG. 4) and/or a debossed pattern (see 281 of FIG. 4) may be formed on at least one area of the inner surface (see 230a of FIG. 4) of the hole 230. At least one pattern 260 of the embossed pattern and the debossed pattern formed on the inner surface of the hole 230 may be an irregularly formed and/or a random pattern.

According to an embodiment, a fluid including the active material, the binder, the conductive material, and/or a solvent combined within the barrel 220 may flow in the X-axis direction by the rotational movement of the pair of screws 211 and 212. The shear force due to the rotational movement of the screws 211 and 212 may be sufficiently transmitted to the fluid via the pattern 260 formed on the inner surface of the hole 230 in the space defined by the inner surface of the hole 230 and the outer surfaces of the screws 211 and 212. As a comparative example, when no pattern is formed on the inner surface of the hole 230, a slip may occur because the fluid does not receive sufficient shear force. On the other hand, according to embodiments of the present invention, the active material, the binder, and/or the conductive material may be evenly dispersed and mixed by the pattern 260 formed on the inner surface of the hole 230, and at the same time, the shear force by the rotational movement of the screw may be effectively transmitted.

As an embodiment, as shown in FIG. 2, the pattern 260 may be formed on the entire area of the inner surface (see 230a of FIG. 4) of the hole 230 of the barrel 220.

As an embodiment, as shown in FIG. 3, at least one pattern 260 of the embossed pattern and the debossed pattern may be formed in a partial area of the inner surface of the hole 230 of the barrel 220. The hole 230 of the barrel 220 may include a first area 231 in which the pattern 260 is formed and a second area 232 in which the pattern 260 is not formed. The first area 231 and the second area 232 of the hole 230 may be alternately formed in the longitudinal direction (e.g., X-axis direction) of the barrel 220. The first area 231 may include a kneading section in which the active material, the binder, and/or the conductive material are mixed. The second area 232 may include a section in which the active material, the binder, and the conductive material are supplied and transported.

Referring to FIGS. 1-3, according to an embodiment, the driving motor 213 may be connected to the pair of screws 211 and 212 to provide rotational driving force to the screws 211 and 212. The controller 214 is configured to control the operation of the driving motor 213 based on components and/or contents of the active material, the binder, and/or the conductive material. In an embodiment, the controller 214 is configured to control the torque of the driving motor 213 pursuant to the composition ratio of the active material, the binder, and/or the conductive material.

According to an embodiment, the discharge module 300 may discharge the electrode slurry 30 to the coating device 20. The discharge module 300 may discharge the electrode slurry 30 in which the active material, the binder, and/or the conductive material are evenly dispersed to the coating device. The coating device 20 is configured to form an electrode by applying the electrode slurry 30 to an electrode substrate.

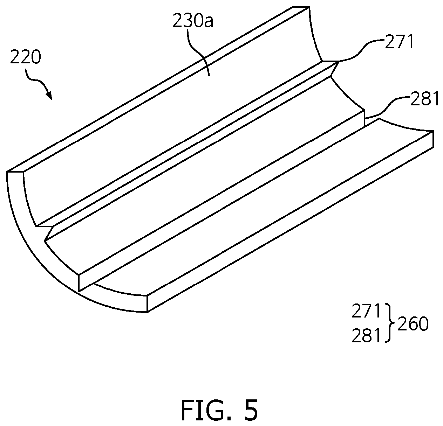

FIG. 4 shows a cross-sectional view taken along line A-A of FIG. 2 according to embodiments of the present invention. FIG. 5 shows an embossed pattern 271 and a debossed pattern 281 according to embodiments of the present invention.

Referring to FIG. 4 and FIG. 5, a hole 230 capable of accommodating a pair of screws 211 and 212 may be formed in a barrel 220. The hole 230 of the barrel 220 may include a first hole 240 in which the first screw 211 can be accommodated and a second hole 250 in which the second screw 212 can be accommodated. The first hole 240 and the second hole 250 may overlap at or near an area 230b in which the first screw 211 and the second screw 212 are configured to engage each other.

According to an embodiment, at least one pattern 260 may be formed on at least one area of the inner surface 230a of the hole 230. The at least one pattern 260 may include an embossed pattern 271 and a debossed pattern 281. The at least one pattern 260 including the embossed pattern 271 and/or the debossed pattern 281 may be an irregularly formed and/or a random pattern. In an embodiment, the random pattern may include a randomly formed scratch. In an embodiment, as illustrated in FIG. 5, at least one of the embossed pattern 271 and the debossed pattern 281 may be continuously formed on the inner surface 230a of the hole along the longitudinal direction of the barrel 220.

According to an embodiment, the first hole 240 accommodates the first screw 211 and the second hole 250 accommodates the second screw 212. The rotational axis 211a of the first screw 211 and the rotation axis 212a of the second screw 212 may be disposed parallel to each other. The screw thread 211b of the first screw 211 and the screw thread 212b of the second screw 212 may rotate in the same direction while engaging each other.

According to an embodiment, a plurality of embossed patterns 271 can be formed on the inner surface 230a of the hole 230. The outer radius L1 (i.e., the outer radius of the screw) of each of the pair of screws 211 and 212 may be less than the length obtained by subtracting the height L3 of the embossed pattern protruding from the inner surface 230a, from the inner radius L2 of each of the pair of holes 240 and 250. In an embodiment, a space separated between the outer diameters of the screws 211 and 212 and the embossed pattern 271 may be formed so that the screws 211 and 212 may rotate and a fluid including a mixture of the active material, the conductive material, and/or the binder may flow.

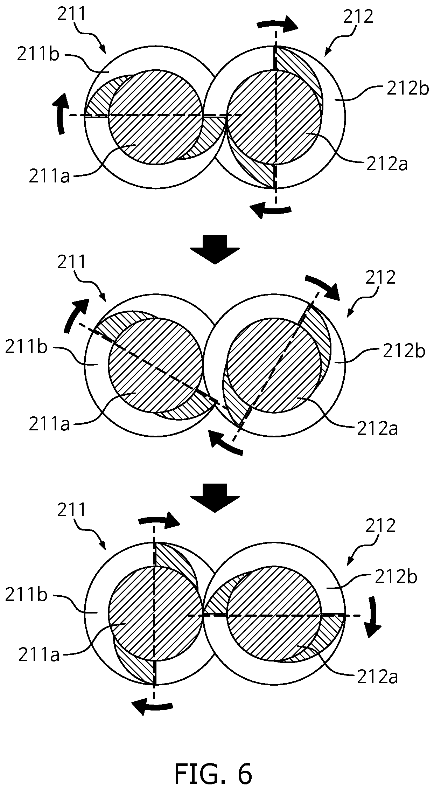

FIG. 6 shows a disposition relationship of a pair of screws 211, 212 according to s of the present invention.

According to an embodiment, the rotation axis 211a of the first screw 211 and the rotation axis 212a of the second screw 212 may be disposed parallel to each other. The screw thread 211b of the first screw 211 and the screw thread 212b of the second screw 212 may rotate in the same direction while engaging with each other.

In an embodiment, the first screw 211 and the second screw 212 may each have a partially substantially elliptical cross-section, and in the partially substantially elliptical cross-section, the long axis of the first screw 211 and the long axis of the second screw 212 may be vertically disposed and engaged to rotate.

In an embodiment, as shown in FIG. 6, the first screw 211 rotates, so that the long axis of the first screw 211 may have angles of 0°, 45°, and 90° from the horizontal axis. The second screw 212 rotates in engagement with the first screw 211, so that the long axis of the second screw 212 may have angles of 90°, 45°, and 0° from the horizontal axis.

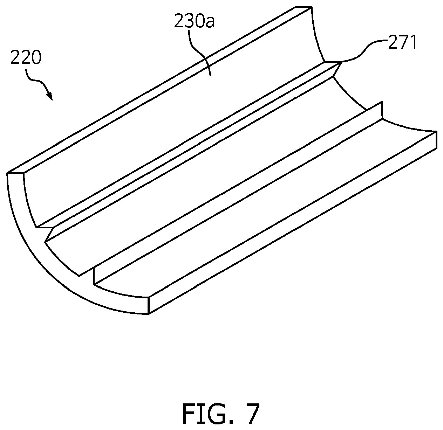

FIG. 7 to FIG. 13 each shows an embossed pattern 271, 272, 273, 274, and 275 according to embodiments of the present invention.

In an embodiment, various embossed patterns 271, 272, 273, 274, and 275 may be formed on at least one area of the inner surface 230a of the hole of the barrel 220.

In an embodiment, as shown in FIG. 7, the embossed pattern 271 may be continuously formed along the longitudinal direction of the screw. The embossed pattern 271 may protrude from the inner surface 230a of the hole of the barrel 220 and may be continuously formed in the longitudinal direction of the screw. A plurality of embossed patterns 271 may be formed and are spaced apart from one another in the circumferential direction on the inner surface 230a of the hole.

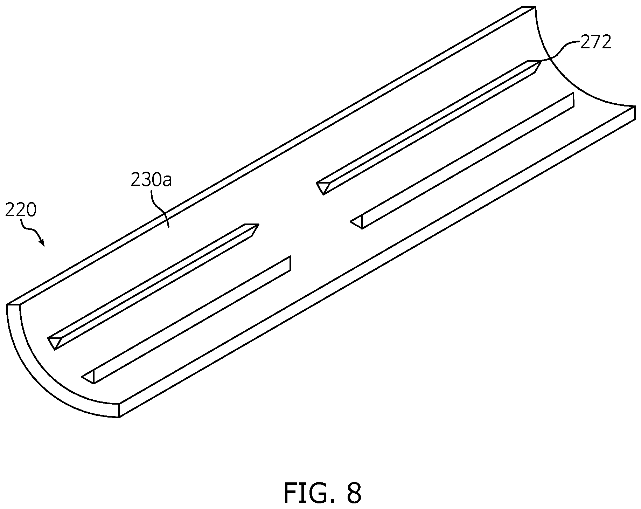

In an embodiment, as shown in FIG. 8, the embossed patterns 272 may be formed and are spaced apart from one another in the longitudinal direction of the screw. The embossed patterns 272 may protrude from the inner surface 230a of the hole of the barrel 220 and are spaced apart from one another in the longitudinal direction of the screw. A plurality of embossed patterns 272 may be formed to be spaced apart from one another in the circumferential direction on the inner surface 230a of the hole.

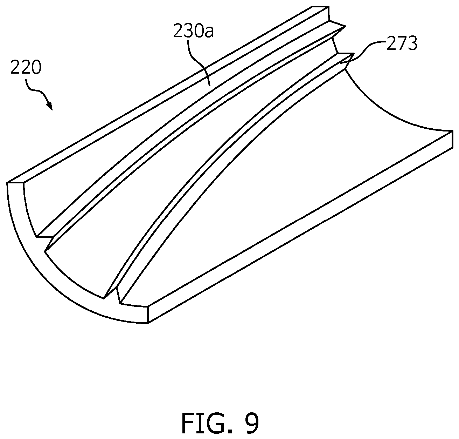

In an embodiment, as shown in FIG. 9, the embossed pattern 273 may be formed to have a spiral structure along the longitudinal direction of the screw. The embossed pattern 273 may protrude from the inner surface 230a of the hole of the barrel 220 and may be formed to have a spiral structure along the longitudinal direction. A plurality of embossed patterns 273 may be formed and are spaced apart from one another in the circumferential direction on the inner surface 230a of the hole.

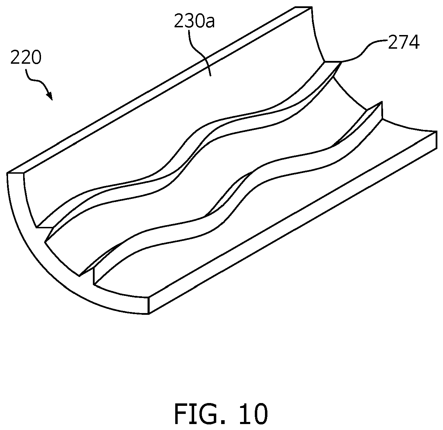

In an embodiment, as shown in FIG. 10, the embossed pattern 274 may be formed to be curved along the longitudinal direction of the screw. The embossed pattern 274 may protrude from the inner surface 230a of the hole of the barrel 220 and may be formed to be curved along the longitudinal direction of the screw. A plurality of embossed patterns 274 may be formed to be spaced apart from one another in the circumferential direction on the inner surface 230a of the hole.

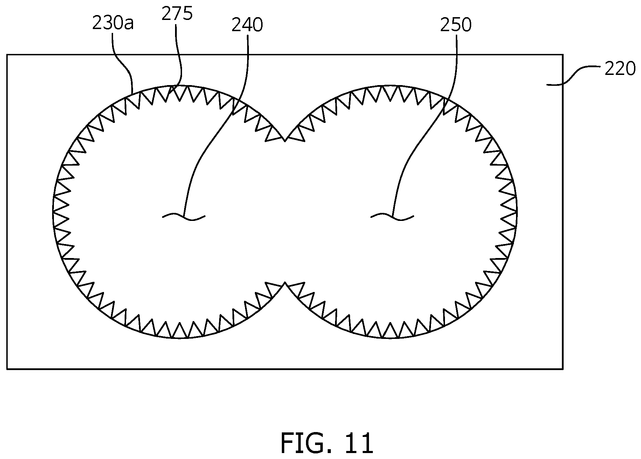

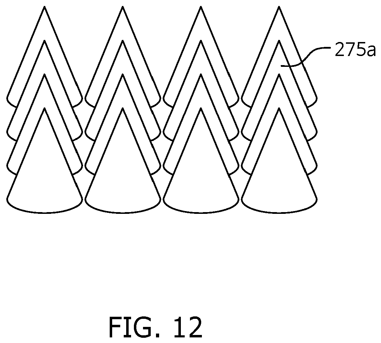

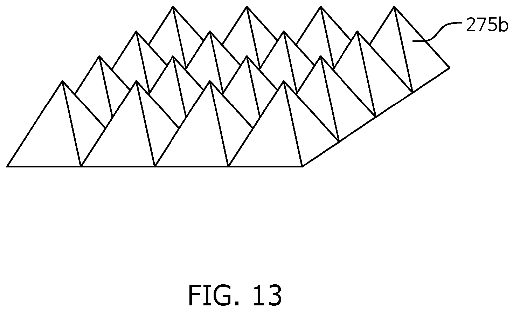

In an embodiment, as shown in FIG. 11, an embossed pattern 275 may be formed to have a plurality of protrusions protruding from at least one area of each of the inner surfaces 230a of the holes 240 and 250. The embossed pattern 275 may be formed to have a plurality of protrusions protruding from the entire area of each of the inner surfaces 230a of the holes 240 and 250, or may be formed to have a plurality of protrusions protruding from a partial area of each of the inner surfaces 230a of the holes 240 and 250. The heights of the protrusions protruding from the inner surfaces 230a of the holes 240 and 250 of the embossed pattern 275 may be different. In an embodiment, as shown in FIG. 12, the embossed pattern 275a may have a conically shaped protrusion. In an embodiment, as shown in FIG. 13, the embossed pattern 275b may have a polygonal pyramidal shaped protrusion.

Various embossed patterns 271, 272, 273, 274, and 275 are separately shown in FIG. 7 to FIG. 13, but any combination of the various embossed patterns 271, 272, 273, 274, and 275 may be formed on the inner surface 230a of the hole 230.

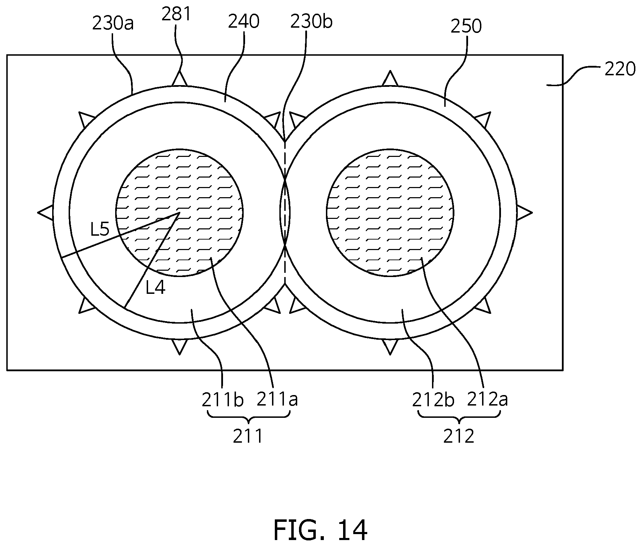

FIG. 14 shows forming a debossed pattern 281 according to embodiments of the present invention.

In an embodiment, The barrel 220 includes holes 240 and 250 capable of accommodating a pair of screws 211 and 212. The first hole 240 accommodates the first screw 211 and the second hole 250 accommodates the second screw 212. The first hole 240 and the second hole 250 overlap at or near an area 230b in which the first screw 211 and the second screw 212 are configured to engage each other.

According to an embodiment, a debossed pattern 281 may be formed on at least one area of the inner surface 230a of the hole The debossed pattern 281 formed on the inner surface 230a of the hole may include an irregularly formed and/or random pattern (for example, a scratch).

According to an embodiment, the first hole 240 accommodates the first screw 211 and the second hole 250 accommodates the second screw 212. The rotational axis 211a of the first screw 211 and the rotation axis 212a of the second screw 212 may be disposed parallel to each other. The screw thread 211b of the first screw 211 and the screw thread 212b of the second screw 212 may rotate in the same direction while engaging each other.

According to an embodiment, a plurality of debossed patterns 281 can be formed on the inner surface 230a of the hole. The the outer radius L4 (i.e., the outer radius of the screw) of each of the pair of screws 211 and 212 may be less than the inner radius L5 of each of the pair of holes 240 and 250. In an embodiment, a space separated between the outer diameters of the screws 211 and 212 and the inner diameters of the holes 240 and 250 may be formed so that the screws 211 and 212 may rotate and a fluid including a mixture of the active material, the conductive material, and/or the binder may flow.

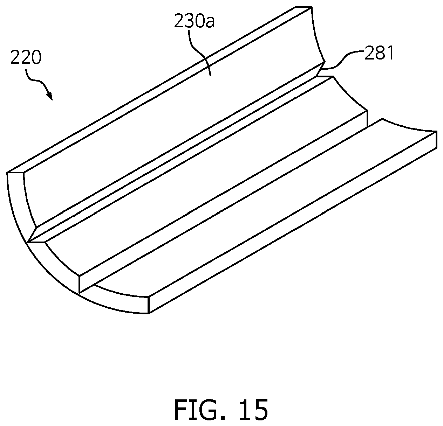

FIG. 15 to FIG. 19 each shows a debossed pattern 281, 282, 283, 284, and 285 according to embodiments of the present invention.

In an embodiment, various debossed patterns 281, 282, 283, 284, and 285 may be formed on at least one area of the inner surface 230a of the hole of the barrel 220.

In an embodiment, as shown in FIG. 15, the debossed pattern 281 may be continuously formed along the longitudinal direction of the screw. The debossed pattern 281 may be recessed into the inner circumferential surface 230a of the hole of the barrel 220 to be continuously formed along the longitudinal direction of the screw. A plurality of debossed patterns 281 may be formed and are spaced apart from one another in the circumferential direction on the inner surface 230a of the hole.

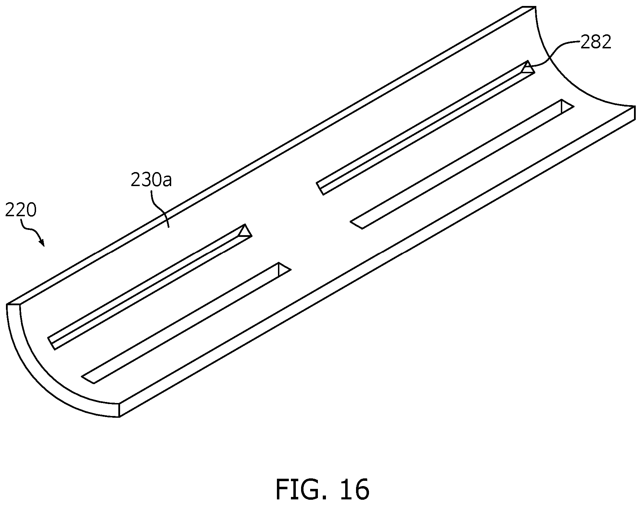

In an embodiment, as shown in FIG. 16, the debossed patterns 282 may be formed and are spaced apart from one another in the longitudinal direction of the screw. The debossed patterns 282 may be recessed into the inner surface 230a of the hole of the barrel 220 and are spaced apart from one another in the longitudinal direction of the screw. A plurality of debossed patterns 282 may be formed to be spaced apart from one another in the circumferential direction on the inner surface 230a of the hole.

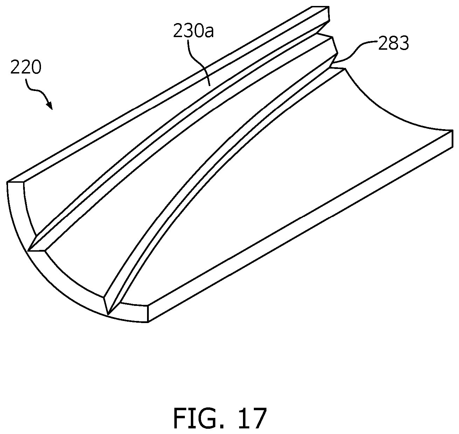

In an embodiment, as shown in FIG. 17, the debossed pattern 283 may be formed to have a spiral structure along the longitudinal direction of the screw. The debossed pattern 283 may be recessed into the inner surface 230a of the hole of the barrel 220 and may be formed to have a spiral structure along the longitudinal direction. A plurality of embossed patterns 283 may be formed and are spaced apart from one another in the circumferential direction on the inner surface 230a of the hole.

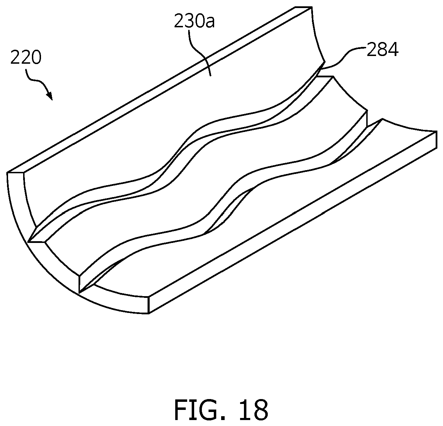

In an embodiment, as shown in FIG. 18, the debossed pattern 284 may be formed to be curved along the longitudinal direction of the screw. The debossed pattern 284 may be recessed into the inner surface 230a of the hole of the barrel 220 and may be formed to be curved along the longitudinal direction of the screw. A plurality of debossed patterns 284 may be formed to be spaced apart from one another in the circumferential direction on the inner surface 230a of the hole.

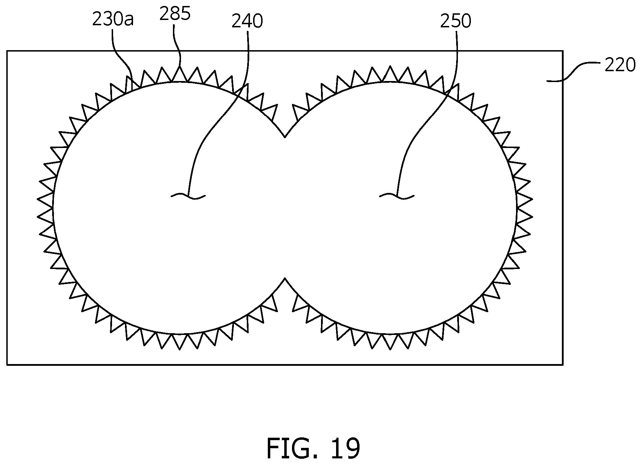

In an embodiment, as shown in FIG. 19, the debossed pattern 285 may be formed to have a plurality of grooves recessed into at least one area of each of the inner surfaces 230a of the holes 240 and 250. The embossed pattern 285 may be formed to have a plurality of grooves recessed into the entire area of each of the inner surfaces 230a of the holes 240 and 250, or may be formed to have a plurality of grooves recessed into a partial area of each of the inner surfaces 230a of the holes 240 and 250. The depths of the grooves recessing from the inner surfaces 230a of the holes 240 and 250 of the debossed pattern 285 may be different. In an embodiment, the debossed pattern 285 may have a conically shaped recess. In an embodiment, the debossed pattern 285 may have a polygonal pyramidal shaped recess.

Various debossed patterns 281, 282, 283, 284, and 285 are separately shown in FIG. 15 to FIG. 19, but any combination of the various debossed patterns 281, 282, 283, 284, and 285 may be formed on the inner surface 230a of the hole 230.

In addition, the embossed pattern and the debossed pattern are shown and described separately, but any combination of the various embossed patterns 271, 272, 273, 274, and 275 shown in FIG. 7 to FIG. 13 and the various debossed patterns 281, 282, 283, 284, and 285 shown in FIG. 15 to FIG. 19 may be formed on the inner surface 230a of one hole 230.

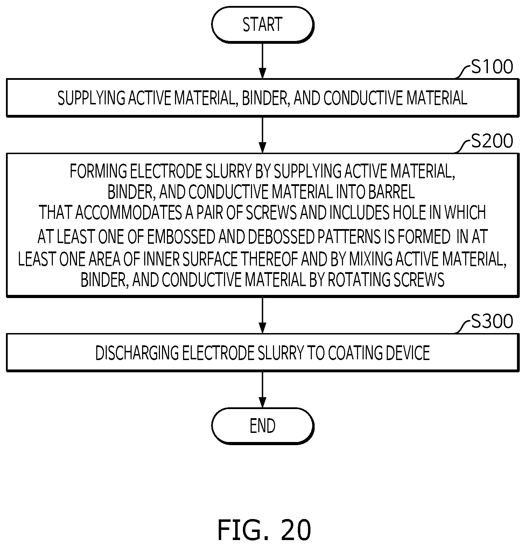

FIG. 20 is a flowchart showing an electrode mixing method according to embodiments of the present invention.

Referring to FIG. 1, FIG. 2, and FIG. 20, the electrode mixing method may include supplying an active material, a binder, and a conductive material via the supply module 100 (S100); forming an electrode slurry by mixing an active material, a binder, and/or a conductive material via the mixing module 200 (S200); and discharging the electrode slurry 30 to the coating device 20 via the discharge module 300 (S300). Step S200 may include supplying the active material, the binder, and/or the conductive material into the barrel 220 that accommodates the pair of screws 211 and 212 and includes the hole 230 in which at least one pattern 260 of the embossed and debossed patterns is formed in at least one area of the inner surface thereof; and mixing the active material, the binder, and the conductive material by rotating the pair of screws 211 and 212.

In an embodiment, in step S100, the supply module 100 may supply the active material, the binder, the conductive material, and/or the solvent for forming the electrode slurry 30 in the mixing module 200. In an embodiment, the supply module 100 is capable of distinguishing materials used for the positive electrode and the negative electrode and accordingly supplies the active material, the binder, and/or the conductive material required for each electrode to the mixing module 200. In an embodiment, the supply module 100 may supply the active material, the binder, and/or the conductive material to the mixing module 200 at various ratios based on various configurations of the secondary battery.

In step S200, the mixing module 200 may form the electrode slurry by mixing the active material, the binder, and/or the conductive material. The mixing module 200 may include the barrel 220 having the pair of screws 211 and 212 that are formed with screw threads on the outer surface in the longitudinal direction (e.g., X-axis direction) and are capable of rotating. The hole 230 may accommodate the pair of screws 211 and 212. At least one pattern 260 including the embossed pattern (see 271 of FIG. 4) and/or the debossed pattern (see 281 of FIG. 5) may be formed on at least one area of the inner surface (see 230a of FIG. 4) of the hole 230. At least one pattern 260 of the embossed pattern and the debossed pattern formed on the inner surface 230a of the hole 230 may be an irregularly formed and/or a random pattern. The fluid mixed with the active material, the binder, the conductive material, and/or the solvent within the barrel 220 may flow in the longitudinal direction by the rotational movement of the pair of screws 211 and 212. The shear force due to the rotational movement of the screws 211 and 212 may be sufficiently transmitted to the fluid via the pattern 260 formed on the inner surface of the hole 230 in the space defined by the inner surface of the hole 230 and the outer surfaces of the screws 211 and 212. Additionally, the active material, the binder, and/or the conductive material may be evenly dispersed and mixed by the pattern 260 formed on the inner surface of the hole 230.

In S300, the discharge module 300 may discharge the electrode slurry 30 to the coating device 20. The discharge module 300 may discharge the electrode slurry 30 in which the active material, the binder, and/or the conductive material are substantially evenly dispersed to the coating device. The coating device 20 is configured to form an electrode by applying the electrode slurry 30 to an electrode substrate.

Although the present invention has been described above with respect to embodiments thereof, the present invention is not limited thereto. Various modifications and variations can be made thereto by those skilled in the art within the spirit of the present invention.

### <Description of Notable Reference Symbols>

10: mixing device
20: coating device
30: slurry
100: supply module
200: mixing module
211: first screw
212: second screw
220: barrel
230: hole
260: pattern
271: embossed pattern
281: debossed pattern
300: discharge module

## Claims

1. A mixing device (10) comprising:
a supply module (100) configured to provide an active material, a binder, and/or a conductive material to a mixing module (200);
the mixing module (200) configured to form an electrode slurry comprising combining the active material, the binder, and/or the conductive material; and
a discharge module (300) configured to discharge the electrode slurry,
wherein the mixing module (200) comprises:
a first screw (211) positioned along a longitudinal direction of the mixing module (200);
a second screw (212) positioned along the longitudinal direction; and
a barrel (220) comprising a hole (230) configured to accommodate the first screw (211) and the second screw (212),
wherein the barrel (220) comprises one or more of an embossed pattern (271) or a debossed pattern (281) formed on an inner surface of the hole (230).

2. The mixing device (10) as claimed in claim 1, wherein the one or more of the embossed pattern (271) or the debossed pattern (281) is formed on an entire area of the inner surface.

3. The mixing device (10) as claimed in claim 1 or 2, wherein the hole (230) comprises a first area (231) including the one or more of the embossed pattern (271) or the debossed pattern (281) and a second area (232) in an absence of the embossed pattern (271) and the debossed pattern (281).

4. The mixing device (10) as claimed in claim 3, wherein the first area (231) and the second area (232) are alternately formed along the longitudinal direction.

5. The mixing device (10) as claimed in any of the preceding claims, wherein the hole (230) comprises a first hole (240) accommodating the first screw (211) and a second hole (250) accommodating the second screw (212), and wherein the first hole (240) and the second hole (250) overlap at or near an area in which the first screw (211) and the second screw (212) are configured to engage each other.

6. The mixing device (10) as claimed in any of the preceding claims, wherein the first screw (211) and the second screw (212) have a partially substantially elliptical cross-section, and in the partially substantially elliptical cross-section, a long axis of the first screw (211) and a long axis of the second screw (212) are perpendicularly disposed from each other.

7. The mixing device (10) as claimed in any of the preceding claims, wherein the mixing module (200) further comprises:
a driving motor (213) rotatably connected to each of the first screw (211) and the second screw (212); and
a controller (214) configured to control the driving motor (213).

8. The mixing device (10) as claimed in any of the preceding claims, wherein the one or more of the embossed pattern (271) or the debossed pattern (281) includes an irregularly formed and/or a random pattern; and/or
wherein the one or more of the embossed pattern (271) or the debossed pattern (281) is continuously formed along the longitudinal direction; and/or
wherein the one or more of the embossed pattern (271) or the debossed pattern (281) includes two or more of the embossed pattern (272) or the debossed pattern (282) spaced apart from one another along the longitudinal direction; and/or
wherein the one or more of the embossed pattern (271) or the debossed pattern (281) has a spiral structure (273, 283) along the longitudinal direction; and/or
wherein the one or more of the embossed pattern (271) or the debossed pattern (281) includes a curved structure (274, 284) along the longitudinal direction.

9. The mixing device (10) as claimed in any of the preceding claims, wherein the embossed pattern (271) includes a plurality of protrusions (275) protruding from the inner surface.

10. The mixing device (10) as claimed in claim 9, wherein the plurality of protrusions (275) has a conical shape or a polygonal pyramidal shape.

11. The mixing device (10) as claimed in claim 9 or 10, wherein respective heights of each of the protrusions (275) from the inner surface are different from one another.

12. The mixing device (10) as claimed in any of the preceding claims, wherein the debossed pattern (281) includes a plurality of grooves recessed into the inner surface.

13. The mixing device (10) as claimed in any of the claims 5 - 12, wherein an outer radius of each of the first screw (211) and the second screw (212) is less than a length obtained by subtracting a height of the embossed pattern (271) protruding from the inner surface, from an inner radius of each of first hole (240) and the second hole (250).

14. The mixing device (10) as claimed in any of the claims 5 -13, wherein an outer radius of each of the first screw (211) and the second screw (212) is less than an inner radius of each of the first hole (240) and the second hole (250).

15. An electrode mixing method comprising:
providing, via a supply module (100), an active material, a binder, and/or a conductive material to a mixing module (200);
forming, via the mixing module (200), an electrode slurry by combining the active material, the binder, and/or the conductive material; and
discharging, via a discharge module (300), the electrode slurry,
wherein the forming comprises:
providing the active material, the binder, and/or the conductive material to a barrel (220) comprising a hole (230) configured to accommodate a first screw (211) and a second screw (212) of the mixing module (200), wherein the barrel (220) comprises one or more of an embossed pattern (271) or a debossed pattern (281) formed on an inner surface of the hole (230); and
combining the active material, the binder, and/or the conductive material by rotating the first screw (211) and the second screw (212).
